# EUROPEAN PATENT APPLICATION

(11) **EP 1 134 651 A2**
(43) Date of publication of application: **19.09.2001**
(21) Application number: 01106248.6
(22) Date of filing: 14.03.2001
(51) Int. Cl.: G06F 3/14

(54) **Portable information terminal device and information communication system**

(30) Priority: 14.03.2000 JP 2000070404
(71) Applicant: NEC CORPORATION, Tokyo (JP)
(72) Inventor: Banno, Satoshi, Tokyo (JP)
(74) Representative: Glawe, Delfs, Moll & Partner

(57) **Abstract**

A portable information terminal device and an information communication system which can freely display highly sophisticated information including letters, characters and images mixed with each other on any of a plurality of display screens. A predetermined top and bottom codes as identification codes are stored in a memory. Contents data is received via an antenna and is demodulated in a radio unit. When first data to be displayed on a first display is mixed with second data to be displayed on a second display in the received data, the second data is sandwiched between the identification codes, and a collator discriminates the identification codes. A control unit selects a target display of the received data according to the discrimination result of the collator.

## Description

### BACKGROUND OF THE INVENTION

The present invention relates to a portable information terminal device and an information communication system and more particularly to a portable information terminal device for displaying received information of letters, characters, images and the like and an information communication system for communicating the information. Prior art

In recent years, with the progresses of various technology such as IC technique, mounting technique and communication technique, a portable information terminal device having a radio communication device has been able to send and receive e-mails (electronic mails) and to read contents data of various kinds of information such as letters, characters, images and the like. In particular, a portable telephone has been developed for use as a portable information terminal device in not only carrying out usual speech calls but also obtaining the contents data of such various kinds of information from various servers on the Internet composed of computer networks connected with one another. An information communication system using such portable information terminal devices has rapidly come into widespread use. Recently, the service rendered from the information communication system has been highly advanced more and more. The information such as the letters, the characters, the images and the like is colored and motion pictures are employed. Thus the information communication system becomes provided with highly sophisticated information.

Up to now the portable information terminal device displaying the highly sophisticated information has only one display screen which is small and cannot be enlarged due to the reduction of the size, weight and power consumption of the portable information terminal device. Hence, for example, when the letters mixed with the image information is displayed on the display screen, the letters and the image cannot be contained within one display screen. Thus, it is necessary to scroll the displayed screen to check the letters and the image, which is troublesome for operation and further the grasp of the information becomes difficult. Further, when a text composed of letters is displayed on the display screen, the reading of the text cannot be kept while the particular screen or text is always displayed.

Hence, while the portable information terminal device gets the contents data of the highly sophisticated information, various techniques for readily grasping the received information by a user have been proposed.

For instance, the Japanese Patent laid-Open Publication No. Hei 10-200960 discloses a portable information terminal device having a plurality of display screens, and received information such as letters, graphics, images and the like is displayed on the different display screens depending on its various kinds.

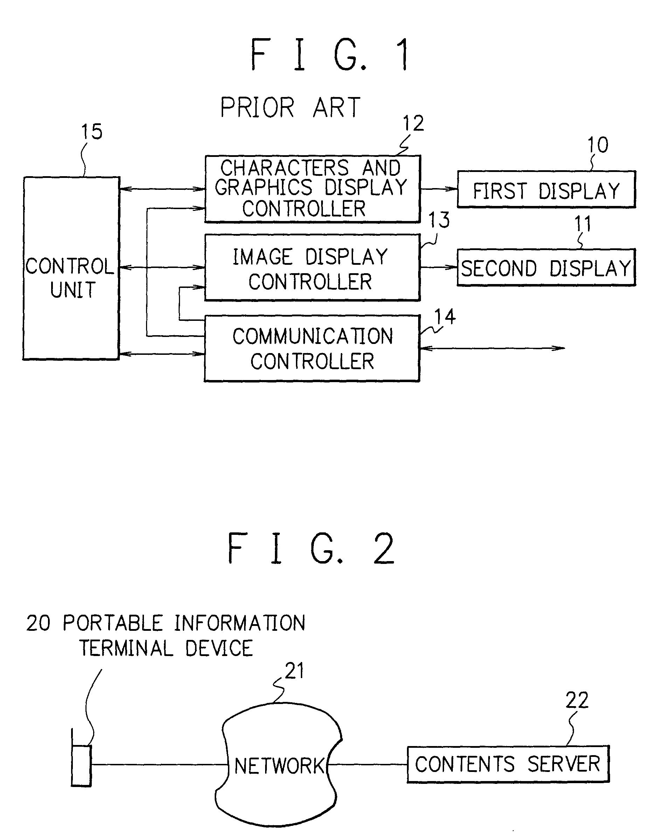

In Fig. 1 there is shown a conventional portable information terminal device disclosed in the Japanese Patent laid-Open Publication No. Hei 10-200960. The portable information terminal device includes a first display 10 for displaying characters and graphics, a second display 11 for displaying color images such as natural color pictures and the like, a characters and graphics display controller 12 for producing display data of the characters and graphics, an image display controller 13 for producing display data of the color images, a communication controller 14 for separating received data sent from a communication network (not shown) into the characters and graphics data and the image data, and a control unit 15 for controlling the characters and graphics display controller 12, the image display controller 13 and the communication controller 14.

In this portable information terminal device, when received from an instruction from the control unit 15, the communication controller 14 separates the received data into the characters and graphics data and the image data. The separated characters and graphics data is sent from the communication controller 14 to the characters and graphics data display controller 12, and the characters and graphics data display controller 12 produces display data for displaying the characters and graphics on the first display 10. The first display 10 receives the display data from the characters and graphics data display controller 12 and displays the characters and graphics. The other image data separated by the communication controller 14 is sent from the communication controller 14 to the image data display controller 13, and the image data display controller 13 decodes the image data to produce display data for displaying the color images on the second display 11. The second display 11 receives the display data from the image data display controller 13 and displays the color images. In this case, the first display 10 is made of a monochrome display screen with a high resolution but no color, and the second display 11 of a color display screen with a low resolution and many colors. Thus, much information can be displayed and the displayed information can be readily grasped by using this portable information terminal device. Further, a compact, lightweight and long time usable portable information terminal device can be obtained.

Another portable information terminal device which is capable of obtaining contents data of the highly sophisticated information and allows a user to grasp the information readily has been proposed. For example, the Japanese Patent Laid-Open Publication No. Hei 8-213961 has proposed an information supply system and a portable terminal device used therefor, which first receives a summary of information and thereafter receives its detail by an instruction of a user. In this case, for instance, only a summary and a title such as a header of the delivered information are first displayed, and then the detailed information is obtained by an instruction of a user in terms of its title. In this way, only the necessary information for the user can be obtained and only the necessary minimum information can be displayed. Thus, the display of the unnecessary information can be eliminated and the necessary information can be readily grasped.

In the portable information terminal device disclosed in the Japanese Patent Laid-Open Publication No. Hei 10-200960, the contents data is displayed on the predetermined displays depending on the kinds of the received information and hence, when one kind of contents data is received, the information is displayed on only one display. In this situation, the other display mounted in the limited space of the compact-oriented portable information terminal device is not used and the resource of the portable information terminal device cannot be effectively utilized. In addition, in some instances, it may become more difficult for the user to grasp the information than the information displayed on the screen of other conventional portable information terminal devices.

Further, in the portable information terminal device disclosed in the Japanese Patent Laid-Open Publication No. Hei 8-213961, only the necessary information can be obtained. However, in the case of the contents data of the characters that the image information is mixed with the obtained information itself, it is still difficult for the user to grasp the information.

### SUMMARY OF THE INVENTION

It is therefore an object of the present invention to provide a portable information terminal device and an information communication system in view of the aforementioned disadvantages of the prior art, which is capable of displaying received information freely on a plurality of displays regardless of kinds of information such as highly sophisticated information.

It is another object of the present invention to provide a portable information terminal device and an information communication system, which can obtain only necessary information and readily grasp the information for a user.

In accordance with one aspect of the present invention, there is provided a portable information terminal device comprising: receiving means for receiving information via a network; at least two display means for displaying the information received by the receiving means; memory means for storing predetermined identification codes; detecting means for detecting whether or not the information received by the receiving means includes the identification codes stored in the memory means; and display control means for permitting any of the display means to display the information on the basis of the detection result of the identification codes of the detecting means.

In the present invention, the portable information terminal device includes a plurality of display means for displaying the information, and the predetermined identification codes are stored in the memory means. It is detected whether or not the information received by the receiving means via the network includes the identification codes, and the received information is displayed on any of the display means according to the detection result.

In a portable information terminal device, the detecting means detects predetermined first and second identification codes and the control means permits any of the display means to display the information sandwiched between the first and second identification codes.

In the present invention, the first and second identification codes are previously detected from the received information, and the data row sandwiched between the identification codes is displayed on any of a plurality of display means. Hence, the band can be effectively used in the data communication.

In accordance with another aspect of the present invention, there is provided a portable information terminal device comprising: receiving means for receiving information via a network; memory means for storing predetermined identification codes; detecting means for detecting whether or not the information received by the receiving means includes the identification codes stored in the memory means; extracting means for extracting address data linked to different information from the received information on the basis of the detection result of the identification codes of the detecting means; and obtaining means for obtaining the different information linked to the address data extracted by the extracting means.

In the present invention, the predetermined identification codes are stored in the portable information terminal device, and it is detected whether or not the information received by the receiving means via the network includes the identification codes. The address data linked to the different information is extracted from the received information, and the different information linked to the address data is obtained by the information obtaining means.

In accordance with another aspect of the present invention, there is provided a portable information terminal device comprising: receiving means for receiving information via a network; display means for displaying the information received by the receiving means; memory means for storing predetermined identification codes; detecting means for detecting whether or not the information received by the receiving means includes the identification codes stored in the memory means; extracting means for extracting address data linked to different information from the received information on the basis of the detection result of the identification codes of the detecting means; display control means for permitting the display means to display icons corresponding to the address data extracted by the extracting means; accepting means for accepting a selection of the icons displayed on the display means; and obtaining means for obtaining the different information linked to the address data corresponding to the icons when the accepting means accepts the selection of the icons.

In the portable information terminal device of the present invention including the display means for displaying the received information via the network, the predetermined identification codes are stored, and it is detected whether or not the information received by the receiving means via the network includes the identification codes. The address data linked to the different information is extracted from the received information on the basis of the detection result, and the icon corresponding to the address data is displayed on the display means. Further, the accepting means accepts the selection of the icon, and when this is accepted, the different information linked to the address data corresponding to the icon is obtained.

In accordance with another aspect of the present invention, there is provided a portable information terminal device comprising: receiving means for receiving information via a network; at least two display means for displaying the information received by the receiving means; memory means for storing predetermined identification codes; first detecting means for detecting whether or not the information received by the receiving means includes the identification codes stored in the memory means; extracting means for extracting address data linked to different information from the received information on the basis of the detection result of the identification codes of the first detecting means; first display control means for permitting the display means to display icons corresponding to the address data extracted by the extracting means; accepting means for accepting a selection of the icons displayed on the display means; obtaining means for obtaining the different information linked to the address data corresponding to the icons when the accepting means accepts the selection of the icons; second detecting means for detecting whether or not the different information obtained by the obtaining means includes the identification codes stored in the memory means; and second display control means for permitting any of the display means to display the different information on the basis of the detection result of the identification codes of the second detecting means.

In the portable information terminal device of the present invention, a plurality of display means may be added, and when the different information linked to the address data is obtained, it is detected whether or not the obtained different information includes the identification codes stored in the memory means. The obtained different information is displayed on any of a plurality of display means on the basis of the detected result.

In a portable information terminal device, the address data extracted by the extracting means is sandwiched between predetermined first and second identification codes.

In the present invention, the first and second identification codes are previously detected from the received information, and a data row of the address data sandwiched between the identification codes is extracted. Hence, the band can be effectively used in the data communication.

In accordance with another aspect of the present invention, there is provided an information communication system comprising: a portable information terminal device including: receiving means for receiving information via a network; at least two display means for displaying the information received by the receiving means; memory means for storing predetermined identification codes; detecting means for detecting whether or not the information received by the receiving means includes the identification codes stored in the memory means; and display control means for permitting any of the display means to display the information on the basis of the detection result of the identification codes of the detecting means, and a server including: storing means for storing information to be transmitted; and transmitting means for transmitting the information stored in the storing means to the portable information terminal device via the network.

In the present invention, the information to be transmitted is previously stored in the portable information terminal device via the network, and the information communication system is constructed so that the server for transmitting its storage information to the portable information terminal device may be connected thereto.

In accordance with another aspect of the present invention, there is provided an information communication system comprising: a portable information terminal device including: first receiving means for receiving information via a network; memory means for storing predetermined identification codes; detecting means for detecting whether or not the information received by the first receiving means includes the identification codes stored in the memory means; extracting means for extracting address data linked to different information from the received information on the basis of the detection result of the identification codes of the detecting means; first transmitting means for transmitting an obtaining request of the different information on the basis of the address data extracted by the extracting means; and second receiving means for receiving the different information linked to the address data according to the obtaining request transmitted from the first transmitting means, and a server including: storing means for storing information to be transmitted; third receiving means for receiving the obtaining request transmitted by the first transmitting means; and second transmitting means for reading the different information requested by the obtaining request received by the third receiving means out of the storing means and transmitting the different information to the portable information terminal device via the network.

In the present invention, the information to be transmitted is previously stored in the portable information terminal device via the network, and the information communication system is constructed so that the server for reading out the information requested by the received obtaining request and transmitting the read-out information to the portable information terminal device may be connected thereto.

In accordance with another aspect of the present invention, there is provided an information communication system comprising: a portable information terminal device including: first receiving means for receiving information via a network; display means for displaying the information received by the first receiving means; memory means for storing predetermined identification codes; detecting means for detecting whether or not the information received by the receiving means includes the identification codes stored in the memory means; extracting means for extracting address data linked to different information from the received information on the basis of the detection result of the identification codes of the detecting means; display control means for permitting the display means to display icons corresponding to the address data extracted by the extracting means; accepting means for accepting a selection of the icons displayed on the display means; first transmitting means for transmitting an obtaining request of the different information linked to the address data corresponding to the icons when the accepting means accepts the selection of the icons; and second receiving means for receiving the different information linked to the address data according to the obtaining request transmitted from the first transmitting means, and a server including: storing means for storing information to be transmitted; third receiving means for receiving the obtaining request transmitted by the first transmitting means; and second transmitting means for reading the different information requested by the obtaining request received by the third receiving means out of the storing means and transmitting the different information to the portable information terminal device via the network.

In the present invention, the information to be transmitted is previously stored in the portable information terminal device via the network, and the information communication system is constructed so that the server for reading out the information requested by the received obtaining request and transmitting the read-out information to the portable information terminal device may be connected thereto.

In accordance with another aspect of the present invention, there is provided an information communication system comprising: a portable information terminal device including: first receiving means for receiving information via a network; at least two display means for displaying the information received by the first receiving means; memory means for storing predetermined identification codes; first detecting means for detecting whether or not the information received by the receiving means includes the identification codes stored in the memory means; extracting means for extracting address data linked to different information from the received information on the basis of the detection result of the identification codes of the first detecting means; first display control means for permitting the display means to display icons corresponding to the address data extracted by the extracting means; accepting means for accepting a selection of the icons displayed on the display means; first transmitting means for transmitting an obtaining request of the different information linked to the address data corresponding to the icons when the accepting means accepts the selection of the icons; second receiving means for receiving the different information linked to the address data according to the obtaining request transmitted from the first transmitting means; second detecting means for detecting whether or not the different information received by second receiving means includes the identification codes stored in the memory means; and second display control means for permitting any of the display means to display the different information on the basis of the detection result of the identification codes of the second detecting means, and a server including: storing means for storing information to be transmitted; third receiving means for receiving the obtaining request transmitted by the first transmitting means; and second transmitting means for reading the different information requested by the obtaining request received by the third receiving means out of the storing means and transmitting the different information to the portable information terminal device via the network.

In the present invention, the information to be transmitted is previously stored in the portable information terminal device via the network, and the information communication system is constructed so that the server for reading out the information requested by the received obtaining request and transmitting the read-out information to the portable information terminal device may be connected thereto.

### BRIEF DESCRIPTION OF THE DRAWINGS

The objects, features and advantages of the present invention will become more apparent from the consideration of the following detailed description, taken in conjunction with the accompanying drawings, in which:
Fig. 1 is a block diagram showing a brief construction of a conventional portable information terminal device disclosed in the Japanese Patent Laid-Open Publication No. 10-200960;
Fig. 2 is a block diagram of an information communication system to be applied by a portable information terminal device according to a first embodiment of the present invention;
Fig. 3 is a block diagram of a portable information terminal device according to a first embodiment of the present invention;
Fig. 4 is a schematic view showing one example of contents data received via a network by the portable information terminal device;
Fig. 5 is a flow chart showing an operation for displaying received data on first and second displays by a control unit;
Fig. 6 is a schematic view showing one example of contents data received via the network by a portable information terminal device according to a second embodiment of the present invention;
Fig. 7 is a schematic view showing icon information used in the portable information terminal device according to the second embodiment of the present invention;
Fig. 8 is a schematic view showing one example of contents data specified by address data in the portable information terminal device according to the second embodiment of the present invention;
Figs. 9 and 10 are flow charts showing the first half part and the latter part of an operation of a control unit of the portable information terminal device according to the second embodiment of the present invention; and
Fig. 11 is a schematic view showing one example of an operating sequence of a portable information terminal device in an information communication system according to the second embodiment of the present invention.

### DESCRIPTION OF THE PREFERRED EMBODIMENTS

First, a portable information terminal device in an information communication system according to a first embodiment of the present invention will be described in detail.

### First Embodiment

In Fig. 2, there is shown an information communication system to be applied by a portable information terminal device according to the first embodiment of the present invention. A portable information terminal device 20 is connected to a contents server 22 via a network 21. The portable information terminal device 20 includes a plurality of display screens and displays data received via the network 21 on the display screens. The network 21 includes a general public network, an ISDN (integrated services digital network), a portable telephone network, and the like irrespective of wired or wireless. The portable information terminal device 20 sends and receives data to and from the contents server 22 depending on its communication types. The contents server 22 is given addresses which are uniquely identifiable within the network 21, and stores contents data of various kinds of information such as letters, characters, images and the like.

In this information communication system, the contents server 22 transmits the contents data attached by the predetermined identification codes for changing the target displays of the portable information terminal device 20 via the network 21. The portable information terminal device 20 receives the contents data and discriminates the identification codes from the received data. According to the discrimination result, the portable information terminal device 20 can select the target displays of the received data from the plurality of the display screens.

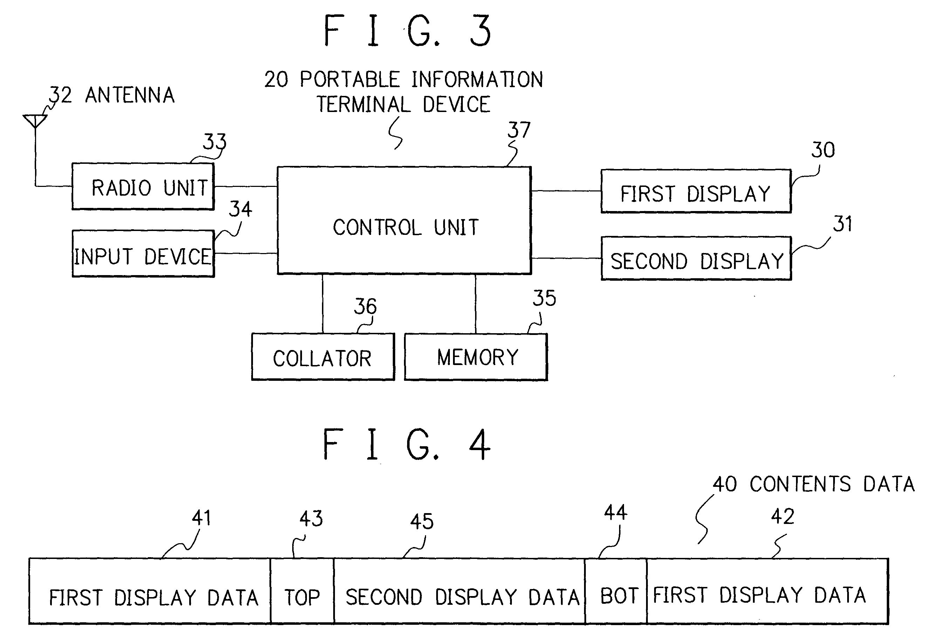

Fig. 3 illustrates a portable information terminal device which is capable of changing the target displays according to the first embodiment of the present invention. The portable information terminal device 20 comprises a first display 30, a second display 31, an antenna 32 for carrying out sending and receiving the data to and from the contents server 22 via the network 21, and a radio unit 33 for demodulating the received data from the antenna 32 and modulating the sending data transmitting from the antenna 32. The portable information terminal device 20 further comprises an input device 34 for moving a cursor to select display information of the first and second displays 30 and 31 and determining the selection of the display information, a memory 35 for storing the received data demodulated in the radio unit 33, necessary information for controlling various operations of the portable information terminal device 20 and the aforementioned identification codes, a collator 36 for collating the identification codes contained in the received data demodulated in the radio unit 33 with the identification codes previously stored in the memory 35, and a control unit 37 for controlling the first and second displays 30 and 31, the radio unit 33, the input device 34, the memory 35 and the collator 36.

Fig. 4 shows one example of the contents data that the portable information terminal device 20 receives via the network 21. The portable information terminal device 20 receives the data transmitted from the contents server 22 via the network 21 at the antenna 32 in a predetermined receiving unit and demodulates the received data in the radio unit 33 to produce the contents data 40, as shown in Fig. 4. In the contents data 40, first display data for displaying the information on the first display 30 and second display data for displaying the information on the second display 31 is mixed. The second display data is attached by a predetermined top code (hereinafter referred to as TOP) to its head or top and a predetermined bottom code (hereinafter referred to as BOT) to its tail or bottom. The TOP and the BOT are stored in the memory 35. In the contents data shown in Fig. 4, the first display data 41 and 42 shows the data to be displayed on the first display 30, and the second display data 45 attached by the TOP and the BOT to its top and bottom shows the data to be displayed on the second display 31.

In the portable information terminal device 20, the control unit 37 discriminates the identification codes added to the contents data and selects the target display of the data. The control unit 37 includes a CPU (central processing unit:not shown) and can carry out various controls pursuant to programs stored in the memory 35.

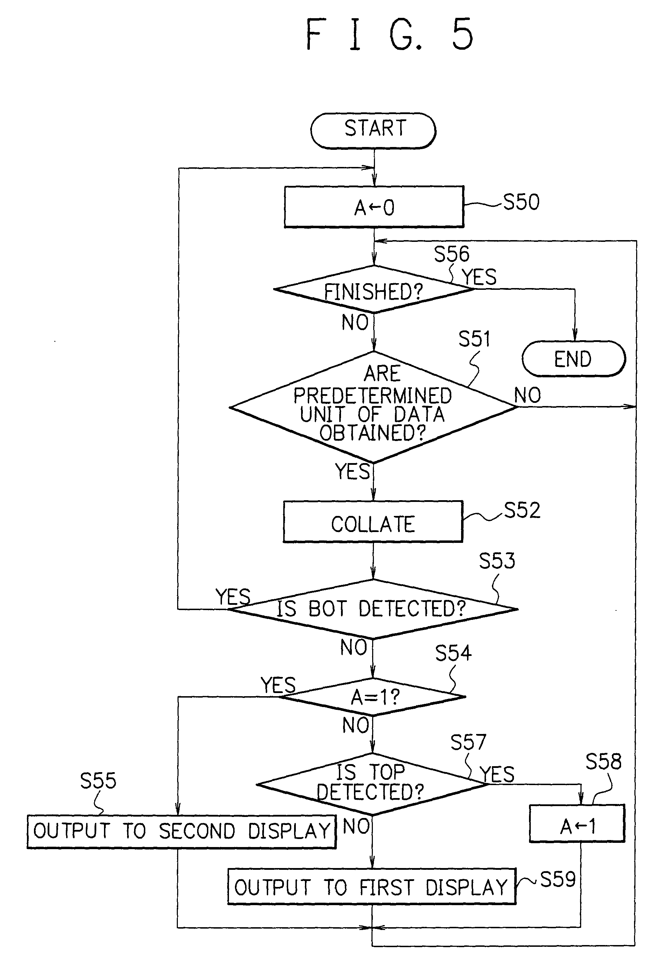

Fig. 5 shows a display operation of received data using the control unit 37 of the portable information terminal device 20. The control unit 37 sets a flag A to "1" when the TOP is detected but the corresponding BOT is not detected. The flag A shows that the TOP is detected.

The control unit 37 first initializes the flag A to "0" before the contents data is obtained from the contents server 22 via the network 21 in step S50. At this time, unless a display operation of a series of received data is finished by a finish instruction such as a compulsory display stop instruction or the like in step S56: NO, the control unit 37 sends a message from the antenna 32 to make access to the contents server 22 and receives the desired contents data specified by the input device 34 in a predetermined receiving unit. Further, the received data is demodulated by the radio unit 33 to obtain the data shown in Fig. 4. The control unit 37 monitors whether or not the data becomes a predetermined unit of obtained data in step S51. When detecting that the data does not become the predetermined unit of the obtained data in step S51: NO, the operation is returned to step S56. When detecting that the data becomes the predetermined unit of the obtained data in step S51: YES, the control unit 37 makes the collator 36 read out the TOP and the BOT as the identification codes previously stored in the memory 35 and start a collation of the predetermined unit of the obtained data with the identification codes from its head in step S52.

First, the collator 36 detects whether or not the obtained data coincides with the BOT from its head in step S53, and, when detecting that the obtained data coincides with the BOT in step S53: YES, the operation is returned to step S50 to initialize the flag A to "0".

On the other hand, when the collator 36 detects that the obtained data does not coincide with the BOT in step S53: NO, the control unit 37 discriminates whether or not the flag A is "1" in step S54.

When the control unit 37 discriminates that the flag A is "1" in step S54: YES, since the TOP has been detected, the obtained data of the second display data next to the TOP is output to the second display 31 in step S55. Then, the operation is returned to step S56, and the control unit 37 checks the finish of the display operation by the finish instruction such as the compulsory display stop instruction or the like in step S56. When the display operation is not finished in step S56: NO, the control unit 37 monitors whether or not the data received again becomes the predetermined unit of the obtained data in step S51.

Next, when the control unit 37 discriminates that the flag A is not "1" in step S54: NO, the collator 36 detects whether or not the obtained data coincides with the TOP from its head in step S57, and, when detecting that the obtained data coincides with the TOP in step S57: YES, the flag A is set to "1" in step S58. That is, the obtained data of the second display data next to the TOP is displayed on the second display 31. When the flag A is set to "1" in step S58, the operation is returned to step S56, and the control unit 37 checks the finish of the display operation by the finish instruction such as the compulsory display stop instruction or the like in step S56. When the display operation is not finished in step S56: NO, the control unit 37 monitors whether or not the data received again becomes the predetermined unit of the obtained data in step S51.

When the collator 36 detects that the obtained data does not coincide with the TOP in step S57: NO, the obtained data is output to the first display 30 in step S59. Then, the operation is returned to step S56, and the control unit 37 checks the finish of the display operation by the finish instruction such as the compulsory display stop instruction or the like in step S56. When the display operation is not finished in step S56: NO, the control unit 37 monitors whether or not the data received again becomes the predetermined unit of the obtained data in step S51.

An operation for displaying received data on the first and second displays 30 and 31 by the control unit 37 of the portable information terminal device 20 will be described more specifically in connection with Fig. 5. In this case, the obtained contents data is shown in Fig. 4.

First, the control unit 37 initializes a flag A in step S50, and receives the desired contents data obtained from the contents server 22 via the network 21 in the predetermined receiving unit. The received data is demodulated in the radio unit 33 to prepare the predetermined unit of the obtained data, and the control unit 37 makes the collator 36 collate the obtained data with the BOT previously stored in the memory 35 in step S53. At this time, the obtained data is not added by any identification code and is normal received data, and then the discrimination of the flag A is executed in step S54. Since the flag A is already initialized, the control unit 37 makes the collator 36 collate the obtained data with the TOP in step S57. At this time, the obtained data is not added by any TOP and is normal received data, and, as shown in Fig. 4, the obtained data of the first display data 41 is output to the first display 30 to display on the first display 30 in step S59.

In this way, the first display data 41 shown in Fig. 4 is displayed on the first display 30. Then, the operation is returned to step S56, and after checking the compulsory display finish, the control unit 37 monitors that the next predetermined unit of obtained data is prepared in step S51. Thereafter, the operation is repeated for the second obtained data, the third obtained data, .... in the same manner as above.

Then, the BOT is not detected in step S53 and the collator 36 detects that the flag A is "0" in step S54. When the collator 36 detects that the TOP 43 of the obtained data shown in Fig. 4 coincides with the TOP stored in the memory 35 in step S57, the flag A is set to "1" in step S58, and the control unit 37 monitors again that the next predetermined unit of obtained data is prepared in step S51. Then, the collator 36 detects the BOT of the next obtained data in step S53. When the BOT is not detected in step S53, the obtained data is the normal received data and the flag A is "1". Hence, the discrimination of the flag A is "1" in step S54, and the obtained data of the second display data 45 divided into the predetermined unit is output to the second display 31 in step S55. Thus, the second display data 45 shown in Fig. 4 is displayed on the second display 31. Thereafter, the next obtained data is repeatedly operated in the same manner.

Then, when the collator 36 detects that the BOT 44 attached to the obtained data shown in Fig. 4 coincides with the BOT stored in the memory 35 in step S53, the operation is returned to step S50 to initialize the flag A to "0". The control unit 37 monitors again that the next predetermined unit of obtained data is prepared. Thereafter, when no BOT is detected, since the flag A is already initialized, the obtained data is determined as the normal received data before the TOP is detected, and the obtained data is displayed on the first display 30. Hence, the first display data 42 shown in Fig. 4 is displayed on the first display 30.

As described above, in a portable information terminal device in an information communication system according to the first embodiment of the present invention, the contents data including first display data to be displayed on the first display 30 and second display data which is to be displayed on the second display 31 and is attached by predetermined identification codes to its top and bottom and which is inserted between the first display data, is received from the contents server 22 via the network 21, and the identification codes are discriminated to select the target displays of the first and second display data. Hence, even when the contents data of highly sophisticated information including letters, characters and images mixed with one another is received, the contents data can be separated into different kinds of information and be displayed on the specified different displays. Thus, while comparing the letters, the characters and the images with the eye, a user can readily grasp the displayed information and the troublesome scroll of the screens one by one can be resolved. Further, regardless of the different kinds of the received information, the displayed screens can be freely selected by the contents supplier and the user, and hence the resource of the portable information terminal device can be effectively utilized. Furthermore, the contents supplier also can effectively display the data using the first and second displays and can distinguish the contents from the other contents.

### Second Embodiment

A portable information terminal device in an information communication system according to a second embodiment of the present invention will be described in detail.

In this embodiment, the portable information terminal device has the same construction as the first embodiment shown in Fig. 3 and thus the detailed description thereof can be omitted for brevity.

Although the second display data attached by the predetermined identification codes to its top and bottom is inserted between the first display data in the first embodiment, in the second embodiment, address data attached by newly defined identification codes is inserted instead of the second display data of the first embodiment.

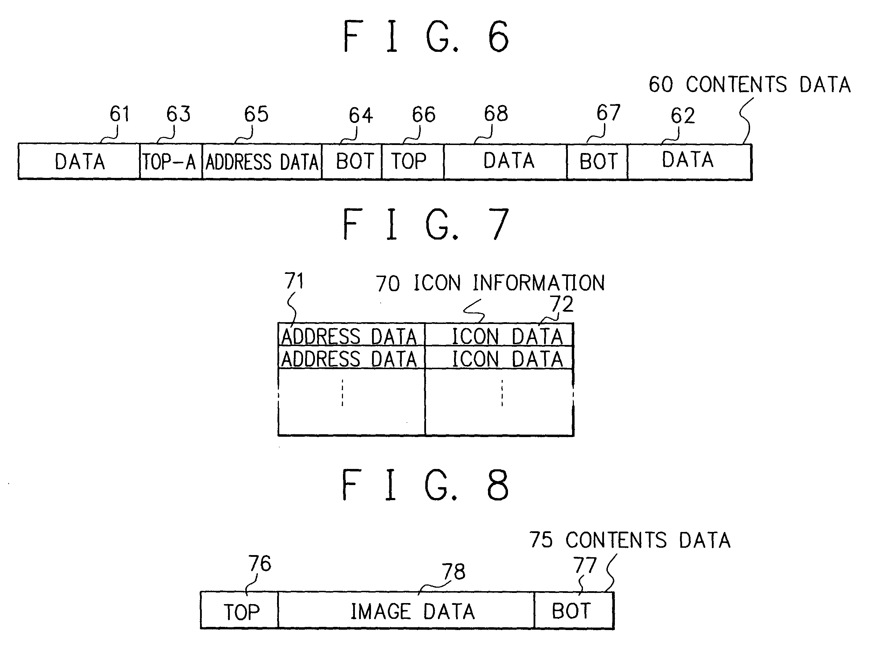

Fig. 6 shows one example of contents data received by the portable information terminal device according to the second embodiment of the present invention. The portable information terminal device 20 receives data transmitted from the contents server 22 via the network 21 at the antenna 32 in a predetermined receiving unit and demodulates the received data in the radio unit 33 to produce the contents data 60, as shown in Fig. 6. In the contents data 60, first data for displaying the information on the first display 30 and second data for displaying the information on the second display 31 is mixed. The second data is attached by the predetermined top code TOP and bottom code BOT to its top and bottom. In the contents data 60 of the second embodiment, address data is sandwiched between a top code for address data (hereinafter referred to as TOP-A) and the BOT to prepare a data row. The TOP, the BOT and the TOP-A are stored in the memory 35.

The address data corresponds to icon data stored in the memory 35. The icon data is image data to be displayed on the display. When the portable information terminal device receives the icon data, an icon corresponding to the received icon data is displayed on the specified display. By selecting the icon displayed on the display by the user, the obtaining of the contents data is requested from the contents server 22 using the received address data corresponding to the icon data.

In the contents data shown in Fig. 6, data 61 and 62 is to be displayed on the first display, and address data 65 attached by the TOP-A 63 and the BOT 64 to its top and bottom a the memory 35. The icon data is image data to be displayed on the display. When the portable information terminal device receives the icon data, an icon corresponding to the received icon data is displayed on the specified display. By selecting the icon displayed on the display by the user, the obtaining of the contents data is requested from the contents server 22 using the received address data corresponding to the icon data.

Fig. 6 shows the contents data 60 received by the portable information terminal device according to the second embodiment of the present invention, in the data 60, the data 61 and 62 are to be displayed on the first display, and address data 65 attached by the TOP-A 63 and the BOT 64 to its top and bottom and a data row of data 68 attached by the TOP 66 and the BOT 67 to its top and bottom is to be displayed on the second display.

Fig. 7 illustrates an outline of construction of an icon information stored in the memory 35 according to second embodiment, in which address data corresponds icon data. In the icon information 70, beforehand by every the address data 71, the icon data 72 as image data to be displayed on the display is stored. In this embodiment, as shown in Fig. 6, when the address data 65 sandwiched between the TOP-A and the BOT is received, the icon data stored in the address information shown in Fig. 7 is read out pursuant to the received address data and is displayed on the specified display.

When the icon data displayed on the display is selected by an instruction of the input device 34 by the user, the portable information terminal device accesses to the contents server via the specified network using the received address data corresponding to the icon data to obtain the contents data specified by the address data.

Fig. 8 shows one example of contents data specified by address data in the portable information terminal device. Contents data 75 is composed of image data 78, TOP 76 and BOT 77, the image data 78 being sandwiched between the TOP 76 and BOT 77, in the same manner as the contents data 60 shown in Fig. 6. Such contents data 75 is determined in the control unit 37, as described above, and an image corresponding to the image data 78 is shown in the second display 31. The image data 78 is attached by the TOP 76 and the BOT 77 to its top and bottom respectively. However, unless the TOP and the BOT are attached to the data, the data is received as usual data and thus is displayed on the first display 30. The data 78 is not restricted to the image data and may be text data such as letters, characters and the like.

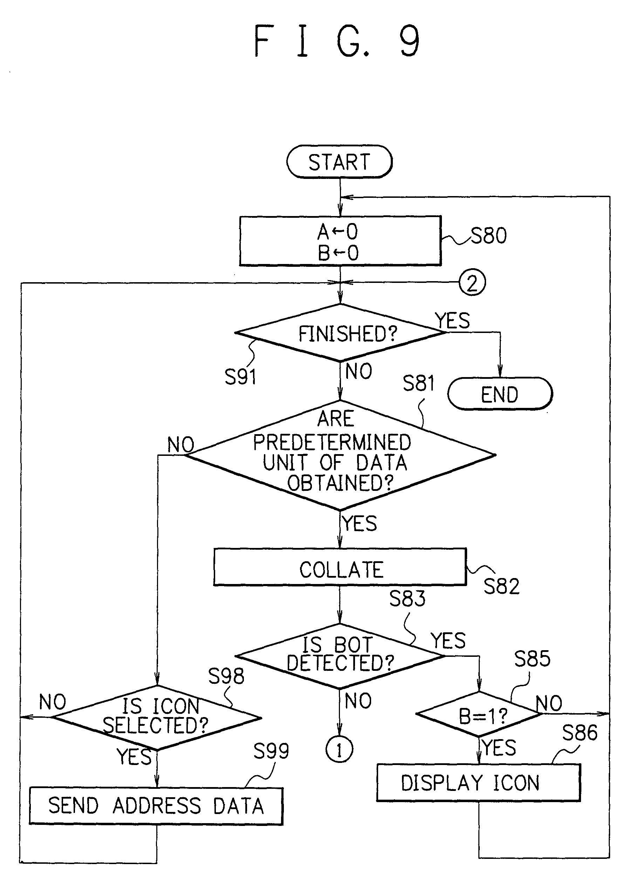

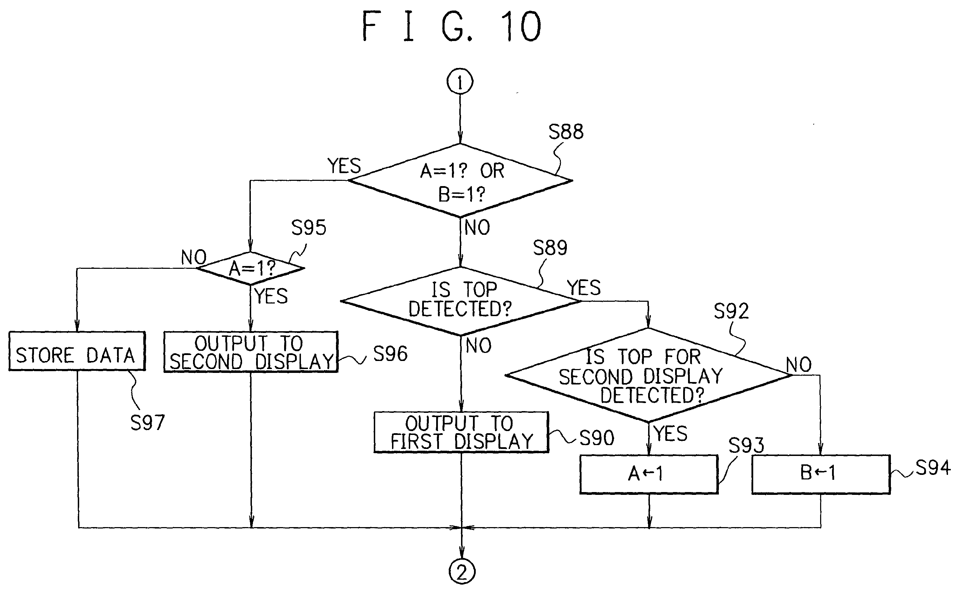

Figs. 9 and 10 illustrate summary of a display operation of contents data including address data using the control unit 37 of the portable information terminal device 20. The control unit 37 according to the second embodiment uses the flag A in the same manner as the first embodiment described above and also another flag B which is set to "1" when the TOP-A is detected but the corresponding BOT is not detected. The flag B represents that the TOP-A is detected.

First, the control unit 37 initializes both the flag A and the flag B to "0" prior to the contents data is obtained from the contents data from the contents server 22 via the network 21 in step S80. At this time, unless a display operation of a series of received data is finished by a finish instruction such as a compulsory display stop instruction or the like in step S91: NO, the control unit 37 sends a message from the antenna 32 to make access to the contents server 22 and receives the desired contents data specified by the input device 34 in a predetermined receiving unit. Further, the received data is demodulated by the radio unit 33 to obtain the data shown in Fig. 6. The control unit 37 monitors whether or not the data becomes a predetermined unit of obtained data in step S81, and when detecting that the data becomes the predetermined unit of the obtained data in step S81: YES, the control unit 37 makes the collator 36 read out the TOP, the BOT and the TOP-A as the identification codes previously stored in the memory 35 and start a collation of the predetermined unit of the obtained data with the identification codes from its head in step S82.

First, the collator 36 detects whether or not the obtained data coincides with the BOT from its head in step S83, and, when detecting that the obtained data coincides with the BOT in step S83: YES, the control unit 37 discriminates whether or not the flag B is "1" in step S85. When detecting that the flag B is "1" in step S85: YES, that is, the TOP-A is detected, the obtaining of the address data is completed, and the icon data corresponding to the obtained address data is read out of the memory 35 according to the icon information stored in the memory 35, as shown in Fig. 7, to display the icon data on the display which is previously specified by the icon data in step S86. For instance, in this case, the icon data is displayed on the first display 30. Thereafter, the operation is returned to step S80 to initialize the flag A and the flag B to "0".

When detecting that the flag B is not "1" in step S85: NO, this means that the BOT corresponding to the TOP is detected when the TOP-A is not detected, the operation is returned to step S80 to initialize the flag A and the flag B to "0".

Then, when the collator 36 detects that the obtained data does not coincide with the BOT in step S83: NO, the control unit 37 discriminates whether or not the flag A is "1" or whether or not the flag B is "1" in step S88. When detecting that both the flag A and the flag B are "0" in step S88: NO, the collator 36 detects whether or not the obtained data coincides with the TOP from its head in step S89, and, when detecting that the obtained data does not coincide with the TOP in step S89: NO, the obtained data is output to the first display 30 to display the obtained data on the first display 30 in step S90. Then, the operation is returned to step S91, and the control unit 37 checks the finish of the display operation by the finish instruction such as the compulsory display stop instruction or the like in step S91. When the display operation is not finished in step S91: NO, the control unit 37 monitors whether or not the data received again becomes the predetermined unit of the obtained data in step S81.

When detecting that the obtained data coincides with the TOP in step S89: YES, the collator 36 detects whether or not the obtained data coincides with the TOP for the second display in step S92, and, when detecting that the obtained data coincides with the TOP for the second display in step S92: YES, the flag A is set to "1" in step 593. When detecting that the obtained data does not coincide with the TOP for the second display in step S92: NO, the flag B is set to "1" in step S94. When the flag A is set to "1" in step S92 or the flag B is set to "1" in step S93, the operation is returned to step S91, and the control unit 37 checks the finish of the display operation by the finish instruction such as the compulsory display stop instruction or the like in step S91. When the display operation is not finished in step S91: NO, the control unit 37 monitors whether or not the data received again becomes the predetermined unit of the obtained data in step S81.

When at least one of the flag A and the flag B is "1" in step S88: YES, the control unit 37 discriminates whether or not the flag A is "1" in step S95. When detecting that the flag A is "1" in step S95: YES, the obtained data is output to the second display 31 to display the obtained data on the second display 31 in step S96. On the other hand, when detecting that the flag A is not "1" in step S95: NO, since the obtained data is the address data, and the obtained data is stored into the memory 35 in step S97. After the step S96 or the step S97, the operation is returned to step S91, and the control unit 37 checks the finish of the display operation by the finish instruction such as the compulsory display stop instruction or the like in step S91. When the display operation is not finished in step S91: NO, the control unit 37 monitors whether or not the data received again becomes the predetermined unit of the obtained data in step S81.

When the control unit 37 detects that the predetermined unit of the obtained data is not obtained in step S81: NO, the control unit 37 makes the input device 34 select the icon displayed in step S86 on the display in step S98. At this time, when the icon displayed in step S86 is selected by a keyboard operation of the input device 34 in step S98: YES, linked address data (datum) selected by the icon are/is transmitted to make a request of obtaining the contents data specified by the linked address data corresponding to the icon data from the contents server 22 in step S99. When the icon is not selected in step S98: NO, or after the transmitting of the address data in step S99, the operation is returned to step S91, and the control unit 37 checks the finish of the display operation by the finish instruction such as the compulsory display stop instruction or the like in step S91. When the display operation is not finished in step S91: NO, the control unit 37 monitors whether or not the data received again becomes the predetermined unit of the obtained data in step S81.

An operation for displaying received data on the first and second displays 30 and 31 by the control unit 37 of the portable information terminal device 20 will be described more specifically in connection with Figs. 9 and 10. In this case, the obtained contents data is shown in Fig. 6.

First, the control unit 37 initializes a flag A and a flag B in step S80, and receives the desired contents data obtained from the contents server 22 via the network 21 in the predetermined receiving unit. The received data is demodulated in the radio unit 33 to prepare the predetermined unit of the obtained data, and the control unit 37 makes the collator 36 collate the obtained data with the BOT previously stored in the memory 35 in step S82. At this time, the obtained data is not added by any identification code and is normal received data. Then the discrimination of the flag A and the flag B is executed in step S88. Since the flag A and flag B are already initialized, the control unit 37 makes the collator 36 collate the obtained data with the TOP or the TOP-A in step S89. In this case, the obtained data is normal received data, and the obtained data is output to the first display 30 to display on the first display 30 in step S90. In this way, the first display data 61 shown in Fig. 6 is displayed on the first display 30. After the operation is returned to step 91, and then checking the compulsory display finish, the control unit 37 monitors that the next predetermined unit of obtained data is prepared in step S81. Thereafter, the operation is repeated for the second obtained data, the third obtained data, .... in the same manner as above.

Then, the BOT is undetected in step S83 and the collator 36 detects that the flag A and the flag B are "0" in step S88. Then, when the collator 36 detects that the TOP-A 63 of the obtained data shown in Fig. 6 coincide with the TOP stored in the memory 35 in step S92, since the matching the TOP-A or TOP is detected ( N and Y in step S92 respectively), the flag B is set to "1" in step S94. Thereafter, the operation is returned to step 91, and the control unit 37 monitors whether or not the data received again becomes the predetermined unit of the obtained data in step S81.

For the next obtained data, the BOT is detected in step S83. When the BOT is undetected in step S83, the obtained data is the normal received data, and since the flag A is "0", the obtained data is determined to be the address data. Hence, the address data is stored into the memory 35 in step S97. Thereafter, for the further obtained data, this discrimination is repeated one by one. In this way, the address data 65 shown in Fig. 6 is stored in the memory 35 before the BOT is detected. When the BOT is then detected in step S83, since the flag B is "1" in step S85, the icon data corresponding to the address data 65 is read out of the icon information shown in Fig. 7 to display the icon corresponding to the address data on the first display 30 in step S86 shown in Fig. 9. Thereafter, the operation is returned to step S80 and the flag A and the Flag B are initialized.

When detecting that the TOP 66 of the obtained data coincides with the TOP stored in the memory 35 in step S92, the Flag A is set to "1" in step S93 shown in Fig. 10. In this case, the data 68 is displayed on the second display in the same manner as the first embodiment. Thus the detailed description can be omitted.

In this second embodiment, by selecting the icon displayed in step S86 corresponding to the address data by the input device 34, the request of obtaining the contents data specified by the address data from the contents server is carried out, and the contents data can be received via the network 21 to display the received data on the specified display.

That is, when the predetermined unit of the obtained data is not received after the data obtaining is finished in step S81 shown in Fig. 9, the icon is selected by moving the cursor on the icon displayed on the display screen by operating a keyboard or a mouse of the input device 34 in step S98 shown in Fig. 9, and the linked address data corresponding to the icon stored in the icon information shown in Fig. 7 is read out and demodulated to transmit the address data from the antenna 32 to the contents server 22 in step S99.

The contents server 22 reads out the contents data corresponding to the received address data and transmits the contents data back to the source of the address data, the server 22 transmits the portable information terminal device according to second embodiment.

In the portable information terminal device, every time the predetermined unit of the data is received, the identification code of the received data is discriminated and the received data is displayed on the specified display comply with the discrimination result. For example, when contents data 75 shown in Fig. 8 is received to obtain the predetermined unit of data, a TOP 76 of header (prefix) code part is discriminated and an image corresponding to image data 78 is displayed on the second display 31.

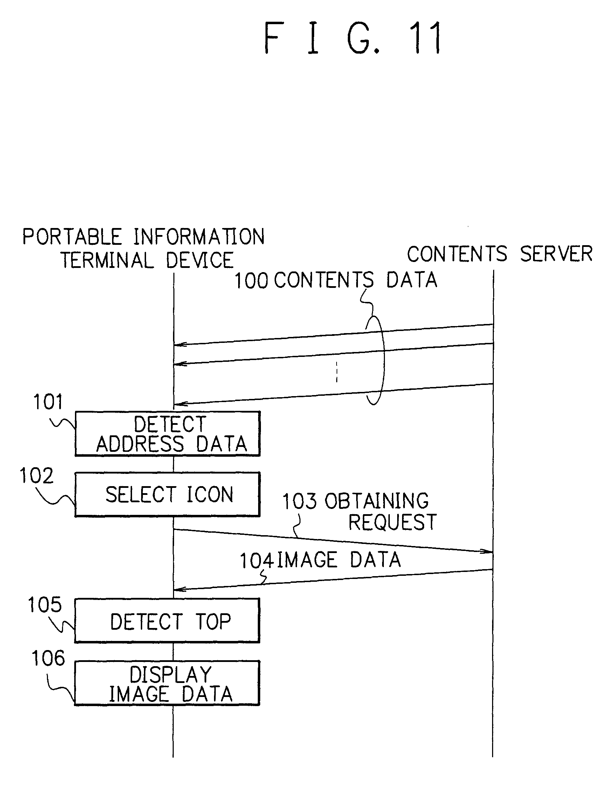

Fig. 11 shows one example of an operating sequence of a portable information terminal device in an information communication system according to the second embodiment of the present invention. When receiving contents data 100 sent from a contents server via a network in a predetermined sending unit, the portable information terminal device according to second embodiment prepares a predetermined unit of obtained data and detects identification codes described above. As a result, when address data (datum) are/is detected 101, an icon corresponding to the address data is displayed and an icon selection from a user is accepted. Then, when the user selects the icon 102, an obtaining request 103 of the contents data specified by the address data corresponding to icon data of icon information stored in a memory from the contents server is transmitted.

The contents server reads out the contents data corresponding to the received address data and sends, for example, image data 104 shown in Fig. 8 to the portable information terminal device.

When receiving the image data 104, the portable information terminal device prepares the predetermined unit of the obtained data again and detects the identification codes as described above. As a consequence, when detecting a TOP 105, the obtained image data (datum) are/is displayed on a second display 106.

As described above, in a portable information terminal device of an information communication system according to the second embodiment of the present invention, a TOP-A is further employed and address data sandwiched between the TOP-A and a BOT as a data row is inserted for obtaining contents data from a contents server via a network, as compared to the first embodiment. When obtaining the address data, an icon corresponding to the address data is displayed on a display screen, and a request for obtaining the contents data from the contents server is carried out in response to an instruction of a user. Hence, in addition to the advantages of the first embodiment, an amount of data to be received can be largely reduced and an amount of information to be displayed on a display can be reduced. The information can be readily grasped by the user.

Furthermore, the user can access to only the necessary information and the obtained data can be selectively displayed on a plurality of display screens.

In the first and second embodiments, although a data row of data sandwiched between two identification codes is inserted between data for displaying, the present invention is not restricted to this. For instance, when only an identification code composed of a code for identification and a following data row is attached to the top of an inserted data row, it is enough to identify only the top (TOP and/or TOP-A). Further, only a code for identification is added to the top of an inserted data row and a target display is selected by a predetermined data length unit, thereby reducing the load of its identification operation.

In the second embodiment, although the icon is displayed on the first display in step S86, the present invention is not limited to this. For example, prior to the obtaining of the contents data, the user selects one of a plurality of displays and may display the icon on the selected display.

In the second embodiment, although the icon is displayed on any of a plurality of displays, the present invention is not restricted to this. For example, a target display for displaying the icon is assigned to any key of a keyboard of the input device, and while the display informs the user of this, the user may obtain the contents specified by the address data linked to the icon from the contents server at the touch of a key.

Further, although the obtaining of the contents data has been described in the first and second embodiments, the present invention is not limited to this.

As described above, in an portable information terminal device according to the present invention, even when the contents data of highly sophisticated information including letters, characters and images mixed with one another is received, the contents data can be separated into different kinds of information and be displayed on the specified different displays. Thus, while comparing the letters, the characters and the images with the eye, a user can readily grasp the displayed information and the troublesome scroll of the screens one by one can be resolved. Further, regardless of the different kinds of the received information, the displayed screens can be freely selected by the contents supplier and the user, and hence the resource of the portable information terminal device can be effectively utilized. Furthermore, the contents supplier also can effectively display the data using the first and second displays and can distinguish the contents from the other contents.

In a portable information terminal device of the present invention, an amount of data to be received can be largely reduced, and an amount of information to displayed on the displays can be effectively reduced to allow the user to grasp the information easily.

In a portable information terminal device of the present invention, an amount of data to be received can be largely reduced, and an amount of information to displayed on the displays can be effectively reduced to allow the user to grasp the information easily. Further, the user can access to only the necessary information a simple operation to allow the user to grasp highly sophisticated information more easily.

In a portable information terminal device of the present invention, in addition to the effects described above, as to the information linked to address data, identification codes are detected, and the obtained information can be selectively displayed on any of a plurality of displays according to the detected result to allow the user to grasp the information ever more easily.

In a portable information terminal device of the present invention, a data row of data sandwiched between identification codes is detected, and a band can bee effectively utilized in data communication.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A portable information terminal device comprising:
a receiving means for receiving information via a network;
a plural of display means for displaying the information received by the receiving means;
a memory means for storing predetermined identification codes;
a detecting means for detecting whether or not the information received by the receiving means includes the identification codes stored in the memory means; and
a display control means for permitting any of the display means to display the information on the basis of the detection result of the identification codes of the detecting means.

2. A portable information terminal device comprising:
a receiving means for receiving information via a network;
a plural of display means for displaying the information received by the receiving means;
a memory means for storing predetermined identification codes;
a detecting means for detecting whether or not the information received by the receiving means includes the identification codes stored in the memory means; and
a display control means for permitting any of the display means to display the information on the basis of the detection result of the identification codes of the detecting means,
said detecting means detects predetermined first and second identification codes and the control means permits any of the display means to display the information sandwiched between the first and second identification codes.

3. A portable information terminal device comprising:
a receiving means for receiving information via a network;
a memory means for storing predetermined identification codes;
a detecting means for detecting whether or not the information received by the receiving means includes the identification codes stored in the memory means;
an extracting means for extracting address data linked to different information from the received information on the basis of the detection result of the identification codes of the detecting means; and
an obtaining means for obtaining the different information linked to the address data extracted by the extracting means.

4. A portable information terminal device comprising:
a receiving means for receiving information via a network;
a display means for displaying the information received by the receiving means,
a memory means for storing predetermined identification codes;
a detecting means for detecting whether or not the information received by the receiving means includes the identification codes stored in the memory means;
an extracting means for extracting address data linked to different information from the received information on the basis of the detection result of the identification codes of the detecting means;
a display control means for permitting the display means to display icons corresponding to the address data extracted by the extracting means;
an accepting means for accepting a selection of the icons displayed on the display means; and
an obtaining means for obtaining the different information linked to the address data corresponding to the icons when the accepting means accepts the selection of the icons.

5. A portable information terminal device comprising:
receiving means for receiving information via a network;
a plural of display means for displaying the information received by the receiving means;
a memory means for storing predetermined identification codes;
a first detecting means for detecting whether or not the information received by the receiving means includes the identification codes stored in the memory means;
an extracting means for extracting address data linked to different information from the received information on the basis of the detection result of the identification codes of the first detecting means;
a first display control means for permitting the display means to display icons corresponding to the address data extracted by the extracting means;
an accepting means for accepting a selection of the icons displayed on the display means;
an obtaining means for obtaining the different information linked to the address data corresponding to the icons when the accepting means accepts the selection of the icons;
a second detecting means for detecting whether or not the different information obtained by the obtaining means includes the identification codes stored in the memory means; and
a second display control means for permitting any of the display means to display the different information on the basis of the detection result of the identification codes of the second detecting means.

6. The portable information terminal device claimed in claim 1, wherein the address data extracted by the extracting means is sandwiched between predetermined first and second identification codes.

7. The portable information terminal device claimed in claim 2, wherein the address data extracted by the extracting means is sandwiched between predetermined first and second identification codes.

8. The portable information terminal device claimed in claim 3, wherein the address data extracted by the extracting means is sandwiched between predetermined first and second identification codes.

9. The portable information terminal device claimed in claim 4, wherein the address data extracted by the extracting means is sandwiched between predetermined first and second identification codes.

10. The portable information terminal device claimed in claim 5, wherein the address data extracted by the extracting means is sandwiched between predetermined first and second identification codes.

11. An information communication system comprising:
a portable information terminal device including:
a receiving means for receiving information via a network;
a plural of display means for displaying the information received by the receiving means;
a memory means for storing predetermined identification codes;
a detecting means for detecting whether or not the information received by the receiving means includes the identification codes stored in the memory means; and
a display control means for permitting any of the display means to display the information on the basis of the detection result of the identification codes of the detecting means, and
a server including:
a storing means for storing information to be transmitted; and
a transmitting means for transmitting the information stored in the storing means to the portable information terminal device via the network.

12. An information communication system comprising:
a portable information terminal device including:
a first receiving means for receiving information via a network;
a memory means for storing predetermined identification codes;
a detecting means for detecting whether or not the information received by the first receiving means includes the identification codes stored in the memory means;
an extracting means for extracting address data linked to different information from the received information on the basis of the detection result of the identification codes of the detecting means;
a first transmitting means for transmitting an obtaining request of the different information on the basis of the address data extracted by the extracting means; and
a second receiving means for receiving the different information linked to the address data according to the obtaining request transmitted from the first transmitting means, and
a server including:
a storing means for storing information to be transmitted;
a third receiving means for receiving the obtaining request transmitted by the first transmitting means; and
a second transmitting means for reading the different information requested by the obtaining request received by the third receiving means out of the storing means and transmitting the different information to the portable information terminal device via the network.

13. An information communication system comprising:
a portable information terminal device including:
a first receiving means for receiving information via a network;
a plural of display means for displaying the information received by the first receiving means;
a memory means for storing predetermined identification codes;
a detecting means for detecting whether or not the information received by the receiving means includes the identification codes stored in the memory means;
an extracting means for extracting address data linked to different information from the received information on the basis of the detection result of the identification codes of the detecting means;
a display control means for permitting the display means to display icons corresponding to the address data extracted by the extracting means;
an accepting means for accepting a selection of the icons displayed on the display means;
a first transmitting means for transmitting an obtaining request of the different information linked to the address data corresponding to the icons when the accepting means accepts the selection of the icons; and
a second receiving means for receiving the different information linked to the address data according to the obtaining request transmitted from the first transmitting means, and
a server including:
a storing means for storing information to be transmitted;
a third receiving means for receiving the obtaining request transmitted by the first transmitting means; and
a second transmitting means for reading the different information requested by the obtaining request received by the third receiving means out of the storing means and transmitting the different information to the portable information terminal device via the network.

14. An information communication system comprising:
a portable information terminal device including:
a first receiving means for receiving information via a network;
a plural of display means for displaying the information received by the first receiving means;
a memory means for storing predetermined identification codes;
a first detecting means for detecting whether or not the information received by the receiving means includes the identification codes stored in the memory means;
an extracting means for extracting address data linked to different information from the received information on the basis of the detection result of the identification codes of the first detecting means;
a first display control means for permitting the display means to display icons corresponding to the address data extracted by the extracting means;
an accepting means for accepting a selection of the icons displayed on the display means;
a first transmitting means for transmitting an obtaining request of the different information linked to the address data corresponding to the icons when the accepting means accepts the selection of the icons;
a second receiving means for receiving the different information linked to the address data according to the obtaining request transmitted from the first transmitting means;
a second detecting means for detecting whether or not the different information received by second receiving means includes the identification codes stored in the memory means; and
a second display control means for permitting any of the display means to display the different information on the basis of the detection result of the identification codes of the second detecting means, and
a server including:
a storing means for storing information to be transmitted;
a third receiving means for receiving the obtaining request transmitted by the first transmitting means; and
a second transmitting means for reading the different information requested by the obtaining request received by the third receiving means out of the storing means and transmitting the different information to the portable information terminal device via the network.
